(19) Europäisches Patentamt
European Patent Office
Office européen des brevets

(11) **EP 3 681 715 B1**

(12) **FASCICULE DE BREVET EUROPEEN**

(45) Date de publication et mention
de la délivrance du brevet:
**01.05.2024 Bulletin 2024/18**

(21) Numéro de dépôt: **18783060.9**

(22) Date de dépôt: **13.09.2018**

(51) Classification Internationale des Brevets (IPC):
**B32B 17/10** (2006.01)   **H05B 3/14** (2006.01)
**H05B 3/86** (2006.01)

(52) Classification Coopérative des Brevets (CPC):
**B32B 17/10036; B32B 17/10174; B32B 17/10192;
B32B 17/10211; B32B 17/1022; B32B 17/10761;
B32B 17/1077; B32B 17/10788; H05B 3/141;
H05B 3/86;** H05B 2203/007; H05B 2203/011

(86) Numéro de dépôt international:
**PCT/FR2018/052249**

(87) Numéro de publication internationale:
**WO 2019/053381 (21.03.2019 Gazette 2019/12)**

(54) **VITRAGE FEUILLETE COMPRENANT UN SUBSTRAT TRANSPARENT A COUCHE CHAUFFANTE AYANT DES LIGNES D'ABLATION SE REFERMANT CHACUNE SUR ELLE-MEME**

VERBUNDGLASSCHEIBE UMFASSEND EIN TRANSPARENTES SUBSTRAT MIT ABLATIONSLINIEN, DIE SICH JEWEILS IN SICH SELBST SCHLIESSEN

LAMINATED GLASS COMPRISING A TRANSPARENT SUBSTRATE WITH A HEATING LAYER HAVING ABLATION LINES EACH CLOSING IN ON THEMSELVES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2017 FR 1758569**

(43) Date de publication de la demande:
**22.07.2020 Bulletin 2020/30**

(73) Titulaire: **SAINT-GOBAIN GLASS FRANCE
92400 Courbevoie (FR)**

(72) Inventeur: **TONDU, Thomas
45600 Sully (FR)**

(74) Mandataire: **Saint-Gobain Recherche
B.P. 135
39, quai Lucien Lefranc
93303 Aubervilliers Cedex (FR)**

(56) Documents cités:
**US-A- 2 878 357         US-A1- 2005 178 756
US-A1- 2013 186 875**

## Description

Les vitrages des véhicules de transport (avions, trains, hélicoptères, bateaux, voitures...) et, dans quelques cas, les vitrages de bâtiments peuvent être équipés de fonctions chauffantes intégrées aux vitrages pour prévenir/éliminer selon les cas la formation de buée en face intérieure ou de givre en face extérieure.

Le chauffage se caractérise par sa puissance spécifique ($W/m^2$) qui est adaptée au besoin spécifique de chaque application.

Le système chauffant est constitué soit de fils incrustés dans le vitrage, soit de couches conductrices transparentes (oxydes dopés : oxyde d'indium dopé à l'étain -en anglais « Indium Tin Oxide » : ITO-, AZO (Aluminum Zinc Oxide), $SnO_2$ : F, ou métaux tels qu'argent, or) permettant un chauffage par effet Joule. Dans ces deux cas, le système chauffant est alimenté par l'intermédiaire d'électrodes sous une tension disponible sur le véhicule ou le bâtiment. Dans le cas simple d'un vitrage rectangulaire à couche chauffante de résistivité de surface Rs, chauffé sous la tension U par deux électrodes sur deux côtés opposés et distantes de D, la puissance spécifique développée Ps est déterminée par l'équation suivante :

$$Ps = \frac{U^2}{Rs \cdot D^2}$$

Les verres avec couche chauffante sont obtenus soit par découpe et éventuellement formage d'un verre présentant déjà une couche soit par dépôt de la couche a posteriori (après découpe) sur un verre en forme. Par « verre », on entend ici de manière privilégiée tout verre minéral, mais aussi un substrat transparent rigide en matériau polymère dont un exemple type est le poly(méthacrylate de méthyle) (PMMA).

Le chauffage homogène d'une forme non rectangulaire étant impossible avec une couche de conductivité électrique homogène, deux stratégies sont mises en oeuvre :

- gradient de conductivité électrique obtenu typiquement par un gradient d'épaisseur d'oxyde métallique conducteur (typiquement ITO) ;
- lignes d'ablation dans une couche électroconductrice, appelées lignes de flux, telles que décrites dans le brevet EP1897412-B1, qui orientent la direction du flux de courant électrique et nécessitent également souvent un gradient d'épaisseur de couche.

L'utilisation de verre à couche conductrice prédéposée (avant découpe, et éventuellement mise en forme - bombage) est industriellement et économiquement beaucoup plus satisfaisante car elle bénéficie des effets de volume d'une production non spécifique à un vitrage.

Néanmoins, ceci est impossible dans deux cas assez courants :

- les conductivités électriques de verre à couche sont incompatibles avec les dimensions des vitrages et la tension d'alimentation disponible pour obtenir la puissance spécifique voulue (autrement dit, pour une tension disponible et une géométrie donnée, une puissance spécifique visée nécessite une valeur de résistance de la couche non disponible ou non standard dans l'automobile ou le bâtiment) ;
- la forme du vitrage s'éloigne sensiblement d'un rectangle : des zones de surchauffe et de souschauffe apparaissent.

Sur les vitrages à forte puissance spécifique (le seuil étant de l'ordre du $kW/m^2$) les surchauffes locales peuvent engendrer un mauvais vieillissement du vitrage, voire des dégradations de l'optique (par fluage local de l'adhésif intercalaire du vitrage feuilleté) ou bullage local de cet adhésif intercalaire.

On peut contrer ces deux limites en déposant de façon maitrisée la couche électroconductrice de façon à :

- adapter la conductivité (par maîtrise du dépôt : gradient d'épaisseur, richesse en $O_2$ de l'oxyde métallique, ITO ou autre...)
- contrer les effets de forme en construisant à dessein une cartographie de conductivité électrique.

Enfin, on peut aussi aider l'homogénéisation de la puissance spécifique en canalisant le courant électrique notamment en ablatant par des procédés laser des lignes de couches conductrice.

US 2005/178756 A1 et US 2 878 357 A proposent des vitrages chauffants présentant un chauffage plus uniforme sur toute la surface de chauffage.

L'invention a donc pour objectif d'utiliser des verres à couche conductrice homogène (conçue pour le contrôle solaire, des performances bas émissives, du chauffage automobile...) pour obtenir une puissance spécifique de chauffage voulue homogène sur toute la surface de chauffage, quelle que soit la complexité de sa géométrie.

Cet objectif est obtenu par l'invention qui, en conséquence, a pour objet un vitrage feuilleté constitué de plusieurs substrats transparents rigides collés les uns aux autres deux à deux par l'intermédiaire d'une couche adhésive intercalaire, l'un au moins de ces substrats transparents étant revêtu d'une couche électroconductrice sensiblement homogène dans sa nature et son épaisseur, dont une zone présente quatre bords opposés deux à deux, un premier et un second bus bars étant disposés le long de deux bords opposés, caractérisé en ce que des lignes d'ablation de la couche électroconductrice se referment sur elles-mêmes en formant des bandes non passantes occupant chacune une majeure partie de la distance entre les bus bars, la forme des bandes non passantes étant apte à procurer une température de chauffage par la couche électroconductrice quasiment constante sur toute la surface de la zone, les bandes passantes ayant une largeur au moins égale à 50 $\mu$m et au plus égale à 5 mm, et la pas du motif des bandes passantes et des bandes non passantes étant au moins égal à 0,5 mm et au plus égal à 10 mm.

Les bandes non passantes font bien entendu référence au passage de courant électrique.

La surface complémentaire de celle des bandes non passantes définit les bandes (ou zones) passantes, qui constituent des sortes de fils de couche électroconductrice dont la largeur et l'espacement sont adaptés pour obtenir la puissance spécifique voulue avec la tension d'alimentation disponible.

Les ablations sélectives de couches permettent de s'adapter à la tension d'alimentation disponible et de gérer les effets de forme. Seule une fraction de la surface de la couche participe à la circulation du courant, ce qui augmente la résistivité apparente. Par ailleurs, cette augmentation de résistivité apparente s'accompagne d'une canalisation du courant qui permet de gérer les formes complexes. On dégrade donc la conductivité apparente en ne faisant passer le courant électrique que dans une fraction de la couche.

De façon générale on peut concevoir des ablations ou des lignes d'ablation pour des formes quelconques.

La largeur des zones non passantes doit être suffisamment faible (ordre de grandeur millimétrique, fonction de la puissance spécifique) pour ne pas engendrer un flou optique en chauffe (effet de changement d'indice optique de l'adhésif intercalaire du vitrage feuilleté avec la température). C'est cette même problématique qui régit l'écartement admissible pour les vitrages chauffants à fils.

Selon des caractéristiques préférées du vitrage feuilleté selon l'invention :

- la distance entre le premier et le second bus bars varie au long des bords opposés, et les bandes passantes sont d'autant plus larges que la distance entre les bus bars est grande ; par exemple, pour une zone de chauffage de largeur constante et donc de distance entre électrodes d'alimentation (bus bars) variable, on peut chauffer de façon en ménageant des faisceaux passants de largeur homogène sur leur longueur mais adaptée à la longueur entre électrodes ;
- la longueur du premier bus bar est plus grande que celle du second bus bar, et la largeur de chaque bande passante croît du premier bus bar vers le second ; ainsi par exemple, pour des électrodes (bus-bars) de longueurs différentes mais parallèles, la bande passante doit former un quadrilatère plus étroit du côté de l'électrode la plus longue pour obtenir une puissance spécifique homogène ;
- la couche électroconductrice est à base d'oxyde métallique dopé tel qu'oxyde d'indium dopé à l'étain (ITO) ou $SnO_2$ : F, ou d'un empilement multicouche argent ; on préfère cette dernière application car les ablations sont moins visibles ;
- la couche conductrice a une conductivité de surface ou résistance par carré comprise entre 0.5 et 100 $\Omega/\square$ ; cette valeur est choisie en fonction des dimensions du vitrage à chauffer et de la tension d'alimentation disponible ;
- les lignes d'ablation ont une largeur de 5 à 200 $\mu$m, sachant que les ablations étroites sont moins visibles mais techniquement plus difficiles à réaliser ;
- les bandes passantes ont une largeur au moins égale à 200 $\mu$m, et au plus égale à 3 mm ;
- le pas du motif des bandes passantes et des bandes non passantes est au moins égal à 1 mm, et au plus égal à 4 mm ; le pas du motif est la largeur d'une bande passante et d'une bande non passante voisines ; ce pas est plus faible pour les plus fortes puissances spécifiques (jusqu'à 7 kW/m$^2$) et plus grand pour les faibles puissances spécifiques (jusqu'à 350 W/m$^2$) ;
- il est en verre tel que sodocalcique, aluminosilicate, borosilicate, ou en matériau polymère tel que poly(méthacrylate de méthyle) (PMMA), polycarbonate (PC) ou polyuréthane (PU) ;
- la couche électroconductrice est sur la face orientée vers l'intérieur du vitrage feuilleté, de l'un au moins des deux substrats transparents rigides constituant les deux surfaces extérieures du vitrage feuilleté ;
- la couche adhésive intercalaire est choisie parmi les polyvinylbutyral (PVB), polyuréthane (PU), éthylène - acétate de vinyle (EVA) seuls ou en mélange de plusieurs d'entre eux.

L'invention a également pour objets :

- l'application du vitrage feuilleté défini précédemment, dans lequel le substrat transparent selon l'invention est destiné à être en contact avec l'atmosphère extérieure, comme vitrage dégivrant / antigivre ;
- l'application du vitrage feuilleté défini précédemment, dans lequel le substrat transparent selon l'invention est destiné à être en contact avec le volume intérieur d'un véhicule ou d'un bâtiment, comme vitrage désembuant / antibuée.

Ces applications visent en particulier un véhicule aérien, terrestre ou aquatique, en particulier un avion, et de façon préférée comme vitrage frontal, voire latéral de cockpit d'avion.

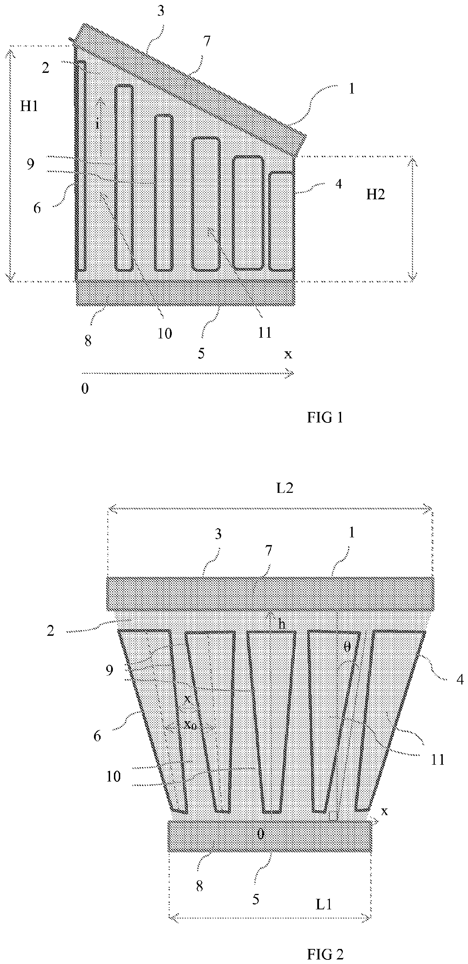

L'invention sera mieux comprise à la lumière de la description suivante des Figures 1 et 2 en annexe, qui sont des représentations schématiques de deux réalisations principales d'un substrat transparent caractéristique du vitrage feuilleté de l'invention.

En référence aux Figures 1 et 2, un substrat transparent en verre aluminosilicate est revêtu d'une couche électroconductrice (2) en oxyde d'indium dopé à l'étain (ITO) d'épaisseur sensiblement homogène, dont une zone (1) présente quatre bords opposés deux à deux (3, 5), (4, 6), un premier et un second bus bars (7, 8) étant disposés le long de deux bords opposés (3,5).

Des lignes d'ablation (9) de la couche électroconductrice (2) se referment sur elles-mêmes en formant des bandes non passantes (11) occupant chacune une majeure partie de la distance entre les bus bars (7, 8). La surface complémentaire des bandes non passantes (11) dans la zone (1) définit des bandes passantes (10).

Exemple de réalisation présenté à la Figure1 :

Puissance spécifique : Ps = 7000 W/m$^2$
Résistivité de surface : R carré = 0.9 $\Omega/\square$
Tension d'alimentation : U = 40 V
Largeur : L = 0.4 m
Plus grande hauteur H1 = 0.4 m
Plus petite hauteur H2 = 0.2 m
On définit une abscisse x qui croît de 0 à la plus grande hauteur H1 à 0,4 m à la plus petite hauteur H2. La hauteur H à une abscisse x est H(x)=H1+x/L . (H2-H1)
La largeur ou pas du motif est définie comme la largeur d'une bande passante (10) et d'une bande non passante (11) voisines ; elle a ici la valeur e0 = 600 $\mu$m, soit 667 motifs.

La largeur de la bande passante (10) est fonction de la position :

$$e = e0 \frac{Rcarré \cdot Ps \cdot H^2(x)}{U^2}$$

Cela donne l'application numérique suivante :

- La largeur passante du côté de la plus petite distance entre bus bar (H2) est e1 = 95 $\mu$m
- La largeur passante du côté de la plus grande distance entre bus bar (H1) est e2 = 378 $\mu$m

Exemple de réalisation présenté à la Figure 2 :

bus bar de L1 = 1 m et L2 = 1.5 m
distance entre bus bars H = 1 m
puissance spécifique de Ps = 1000 W/m$^2$ sous U = 100 V couche de R carré = 5 $\Omega/\square$
n = 31 bandes passantes :
La largeur du motif telle que définie ci-dessus est fonction de la position h entre les deux bus bars x0(h) = (L1+h/H(L2-L1))/n

Le centre de chaque bande passante définit un segment de droite qui forme un angle θ par rapport à la normale aux bus bars.

La largeur de la bande passante vaut :

$$x = \frac{Rcarré}{x_0 cos^2\theta}\left(\frac{(L1+L2)H}{2U}\right)^2 \frac{Ps}{n^2}$$

Dans ce cas précis, la bande passante centrale a une largeur de 2.52 mm du côté du bus bar court (8) et 1.68 mm du côté du bus bar long (7).

L'invention est ainsi particulièrement avantageuse pour les vitrages chauffants de véhicule pour lesquels l'alimentation électrique est imposée, car elle permet l'établissement d'une puissance spécifique de chauffage souhaitée, de façon homogène sur toute la surface de chauffage.

**Revendications**

1. Vitrage feuilleté constitué de plusieurs substrats transparents rigides collés les uns aux autres deux à deux par l'intermédiaire d'une couche adhésive intercalaire, l'un au moins de ces substrats transparents étant revêtu d'une couche électroconductrice (2) sensiblement homogène dans sa nature et son épaisseur, une zone (1) de ce substrat transparent présentant quatre bords opposés deux à deux (3, 5), (4, 6), un premier et un second bus bars (7, 8) étant disposés le long de deux bords opposés (3,5), **caractérisé en ce que** des lignes d'ablation (9) de la couche électroconductrice (2) se referment sur elles-mêmes en formant des bandes non passantes (11) occupant chacune une majeure partie de la distance entre les bus bars (7, 8), la forme des bandes non passantes (11) étant apte à procurer une température de chauffage par la couche électroconductrice (2) quasiment constante sur toute la surface de la zone (1), **en ce que** les bandes passantes (10) ont une largeur au moins égale à 50 $\mu$m, et au plus égale à 5 mm, et **en ce que** le pas du motif des bandes passantes (10) et des bandes non passantes (11) est au moins égal à 0,5 mm, et au plus égal à 10 mm.

2. Vitrage feuilleté selon la revendication 1, **caractérisé en ce que** la distance entre le premier et le second bus bars (7, 8) varie au long des bords opposés (3, 5), et **en ce que** les bandes passantes (10) sont d'autant plus larges que la distance entre les bus bars (7, 8) est grande.

3. Vitrage feuilleté selon l'une des revendications précédentes, **caractérisé en ce que** la longueur du premier bus bar (7) est plus grande que celle du second bus bar (8), et **en ce que** la largeur de chaque bande passante (10) croît du premier bus bar (7) vers le second (8).

**4.** Vitrage feuilleté selon l'une des revendications précédentes, **caractérisé en ce que** la couche électroconductrice (2) est à base d'oxyde métallique dopé tel qu'oxyde d'indium dopé à l'étain (ITO) ou $SnO_2$:F, ou d'un empilement multicouche argent.

**5.** Vitrage feuilleté selon l'une des revendications précédentes, **caractérisé en ce que** la couche conductrice a une conductivité de surface ou résistance par carré comprise entre 0.5 et 100 $\Omega/\square$.

**6.** Vitrage feuilleté selon l'une des revendications précédentes, **caractérisé en ce que** les lignes d'ablation (9) ont une largeur de 5 à 200 $\mu$m.

**7.** Vitrage feuilleté selon l'une des revendications précédentes, **caractérisé en ce que** les bandes passantes (10) ont une largeur au moins égale à 200 $\mu$m, et au plus égale à 3 mm.

**8.** Vitrage feuilleté selon l'une des revendications précédentes, **caractérisé en ce que** le pas du motif des bandes passantes (10) et des bandes non passantes (11) est au moins égal à 1 mm, et au plus égal à 10, de préférence 4 mm.

**9.** Vitrage feuilleté selon l'une des revendications précédentes, **caractérisé en ce que** le substrat transparent revêtu de la couche électroconductrice (2) est en verre tel que sodocalcique, aluminosilicate, borosilicate, ou en matériau polymère tel que poly(méthacrylate de méthyle) (PMMA), polycarbonate (PC) ou polyuréthane (PU).

**10.** Vitrage feuilleté selon l'une des revendications précédentes, **caractérisé en ce que** la couche électroconductrice (2) est sur la face orientée vers l'intérieur du vitrage feuilleté, de l'un au moins des deux substrats transparents rigides constituant les deux surfaces extérieures du vitrage feuilleté.

**11.** Vitrage feuilleté selon l'une des revendications précédentes, **caractérisé en ce que** la couche adhésive intercalaire est choisie parmi les polyvinylbutyral (PVB), polyuréthane (PU), éthylène - acétate de vinyle (EVA) seuls ou en mélange de plusieurs d'entre eux.

**12.** Application d'un vitrage feuilleté selon l'une des revendications 1 à 11, dans lequel le substrat transparent revêtu de la couche électroconductrice (2) est destiné à être en contact avec l'atmosphère extérieure, comme vitrage dégivrant / antigivre.

**13.** Application d'un vitrage feuilleté selon l'une des revendications 1 à 11, dans lequel le substrat transparent revêtu de la couche électroconductrice (2) est destiné à être en contact avec le volume intérieur d'un véhicule ou d'un bâtiment, comme vitrage désembuant / antibuée.

**Patentansprüche**

**1.** Verbundverglasung, bestehend aus mehreren starren transparenten Substraten, die paarweise über eine Zwischenlagenhaftschicht miteinander verklebt sind, wobei mindestens eines dieser transparenten Substrate mit einer elektrisch leitenden Schicht (2) beschichtet ist, die in ihrer Art und ihrer Dicke im Wesentlichen homogen ist, wobei ein Bereich (1) dieses transparenten Substrats vier paarweise gegenüberliegende Kanten (3, 5), (4, 6) aufweist, wobei eine erste und eine zweite Sammelschiene (7, 8) entlang zweier gegenüberliegender Kanten (3, 5) angeordnet sind, **dadurch gekennzeichnet, dass** sich Ablationslinien (9) der elektrisch leitenden Schicht (2) in sich selbst verschließen und nicht durchlässige Bänder (11) ausbilden, die jeweils einen Großteil des Abstands zwischen den Sammelschienen (7, 8) einnehmen, wobei die Form der nicht durchlässigen Bänder (11) geeignet ist, eine nahezu konstante Heiztemperatur durch die elektrisch leitende Schicht (2) über die gesamte Oberfläche des Bereichs (1) bereitzustellen, dass die durchlässigen Bänder (10) eine Breite von mindestens gleich 50 $\mu$m und höchstens gleich 5 mm besitzen, und dass die Teilung des Musters der durchlässigen Bänder (10) und der nicht durchlässigen Bänder (11) mindestens gleich 0,5 mm und höchstens gleich 10 mm ist.

**2.** Verbundverglasung nach Anspruch 1, **dadurch gekennzeichnet, dass** der Abstand zwischen der ersten und der zweiten Sammelschiene (7, 8) entlang der gegenüberliegenden Kanten (3, 5) variiert, und dass die durchlässigen Bänder (10) umso breiter sind, je größer der Abstand zwischen den Sammelschienen (7, 8) ist.

**3.** Verbundverglasung nach einem der vorstehenden Ansprüche, **dadurch gekennzeichnet, dass** die Länge der ersten Sammelschiene (7) größer als die der zweiten Sammelschiene (8) ist, und dass die Breite jedes durchlässigen Bandes (10) von der ersten Sammelschiene (7) zu der zweiten (8) hin zunimmt.

**4.** Verbundverglasung nach einem der vorstehenden Ansprüche, **dadurch gekennzeichnet, dass** die elektrisch leitfähige Schicht (2) auf der Basis eines dotierten Metalloxids, wie zum Beispiel zinndotiertes Indiumoxid (ITO) oder $SnO_2$:F, oder eines mehrschichtigen Silberstapels ist.

**5.** Verbundverglasung nach einem der vorstehenden Ansprüche,
**dadurch gekennzeichnet, dass** die leitfähige Schicht eine Oberflächenleitfähigkeit oder einen Widerstand pro Quadrat zwischen 0,5 und 100 $\Omega/\square$ aufweist.

**6.** Verbundverglasung nach einem der vorstehenden Ansprüche,
**dadurch gekennzeichnet, dass** die Ablationslinien (9) eine Breite von 5 bis 200 $\mu$m besitzen.

**7.** Verbundverglasung nach einem der vorstehenden Ansprüche,
**dadurch gekennzeichnet, dass** die durchlässigen Bänder (10) eine Breite von mindestens gleich 200 $\mu$m und höchstens gleich 3 mm besitzen.

**8.** Verbundverglasung nach einem der vorstehenden Ansprüche,
**dadurch gekennzeichnet, dass** die Teilung des Musters der durchlässigen Bänder (10) und der nicht durchlässigen Bänder (11) mindestens gleich 1 mm und höchstens gleich 10, vorzugsweise 4 mm, beträgt.

**9.** Verbundverglasung nach einem der vorstehenden Ansprüche,
**dadurch gekennzeichnet, dass** das transparente Substrat, das mit der elektrisch leitenden Schicht (2) beschichtet ist, aus Glas wie Natronkalkglas, Aluminosilicat, Borsilicat oder aus Polymermaterial wie Poly(methylmethacrylat) (PMMA), Polycarbonat (PC) oder Polyurethan (PU) besteht.

**10.** Verbundverglasung nach einem der vorstehenden Ansprüche,
**dadurch gekennzeichnet, dass** die elektrisch leitfähige Schicht (2) auf der Fläche, die in Richtung des Inneren der Verbundverglasung gerichtet ist, von mindestens einem der zwei starren transparenten Substrate ist, die die zwei Außenoberflächen der Verbundverglasung ausbilden.

**11.** Verbundverglasung nach einem der vorstehenden Ansprüche,
**dadurch gekennzeichnet, dass** die Zwischenlagenhaftschicht aus Polyvinylbutyral (PVB), Polyurethan (PU), Ethylenvinylacetat (EVA) allein oder als Mischung aus mehreren davon ausgewählt ist.

**12.** Anwendung einer Verbundverglasung nach einem der Ansprüche 1 bis 11, wobei das transparente Substrat, das mit der elektrisch leitenden Schicht (2) beschichtet ist, dazu bestimmt ist, mit der Außenatmosphäre in Kontakt zu kommen, als Enteisungs-/Vereisungsschutzverglasung.

**13.** Anwendung einer Verbundverglasung nach einem der Ansprüche 1 bis 11, wobei das transparente Substrat, das mit der elektrisch leitenden Schicht (2) beschichtet ist, dazu bestimmt ist, mit dem Innenraum eines Fahrzeugs oder eines Gebäudes in Kontakt zu kommen, als Antibeschlags-/Beschlagsschutzverglasung.

**Claims**

**1.** A laminated glazing consisting of a plurality of rigid transparent substrates that are bonded to one another pairwise via an intercalary adhesive layer, at least one of these transparent substrates being coated with an electrically conductive layer (2) that is substantially uniform in nature and thickness, a zone (1) of this transparent substrate having four edges opposing one another in pairs (3, 5), (4, 6), first and second busbars (7, 8) being arranged along two opposite edges (3, 5), **characterized in that** ablation lines (9) of the electrically conductive layer (2) close in on themselves while forming non-conductive strips (11), each occupying a major portion of the distance between the busbars (7, 8), the shape of the non-conductive strips (11) being capable of providing a temperature of heating by the electrically conductive layer (2) that is virtually constant over the entire area of the zone (1), **in that** the width of the conductive strips (10) is at least equal to 50 $\mu$m, and at most equal to 5 mm, and **in that** the pitch of the pattern of the conductive strips (10) and of the non-conductive strips (11) is at least equal to 0.5 mm, and at most equal to 10 mm.

**2.** The laminated glazing as claimed in claim 1, **characterized in that** the distance between the first and second busbars (7, 8) varies along the opposite edges (3, 5), and **in that** the width of the conductive strips (10) increases with the distance between the busbars (7, 8).

**3.** The laminated glazing as claimed in either of the preceding claims, **characterized in that** the first busbar (7) is longer than the second busbar (8), and **in that** the width of each conductive strip (10) increases from the first busbar (7) to the second (8).

**4.** The laminated glazing as claimed in one of the preceding claims, **characterized in that** the electrically conductive layer (2) is based on doped metal oxide such as tin-doped indium oxide (ITO) or $SnO_2$:F, or on a silver multilayer stack.

**5.** The laminated glazing as claimed in one of the preceding claims, **characterized in that** the surface conductivity or sheet resistance of the conductive layer is between 0.5 and 100 $\Omega/\square$.

**6.** The laminated glazing as claimed in one of the preceding claims, **characterized in that** the width of the ablation lines (9) ranges from 5 to 200 μm.

**7.** The laminated glazing as claimed in one of the preceding claims, **characterized in that** the width of the conductive strips (10) is at least equal to 200 μm, and at most equal to 3 mm.

**8.** The laminated glazing as claimed in one of the preceding claims, **characterized in that** the pitch of the pattern of the conductive strips (10) and of the non-conductive strips (11) is at least equal to 1 mm, and at most equal to 10, preferably 4 mm.

**9.** The laminated glazing as claimed in one of the preceding claims, **characterized in that** the transparent substrate that is coated with the electrically conductive layer (2) is made of glass such as soda-lime, aluminosilicate or borosilicate glass, or made of polymer material such as poly(methyl methacrylate) (PMMA), polycarbonate (PC) or polyurethane (PU).

**10.** The laminated glazing as claimed in one of the preceding claims, **characterized in that** the electrically conductive layer (2) is on the face that is oriented toward the interior of the laminated glazing of at least one of the two rigid transparent substrates constituting the two exterior surfaces of the laminated glazing.

**11.** The laminated glazing as claimed in one of the preceding claims, **characterized in that** the intercalary adhesive layer is chosen from polyvinyl butyral (PVB), polyurethane (PU) and ethylene/vinyl acetate (EVA), alone or in a blend of a number thereof.

**12.** An application of a laminated glazing as claimed in one of claims 1 to 11, wherein the transparent substrate coated with the electrically conductive layer (2) is intended to make contact with the outside atmosphere, as a defrosting/anti-frost glazing.

**13.** An application of a laminated glazing as claimed in one of claims 1 to 11, wherein the transparent substrate coated with the electrically conductive layer (2) is intended to make contact with the interior space of a vehicle or of a building, as a defogging/anti-fog glazing.

FIG 1

FIG 2

**EP 3 681 715 B1**

## RÉFÉRENCES CITÉES DANS LA DESCRIPTION

**Documents brevets cités dans la description**

- EP 1897412 B1
- US 2005178756 A1
- US 2878357 A